# EUROPÄISCHE PATENTSCHRIFT

(11) **EP 2 880 745 B1**
(45) Veröffentlichungstag und Bekanntmachung des Hinweises auf die Patenterteilung: **27.11.2019**
(21) Anmeldenummer: 13739969.7
(22) Anmeldetag: 17.07.2013
(51) Int. Cl.: H02K 5/18, H02K 5/20, H02K 9/06, H02K 9/14, H02K 11/33, H02K 5/22

(54) **AKTIVE KÜHLUNG EINES MOTORS MIT INTEGRIERTEM KÜHLKANAL**
ACTIVE COOLING OF A MOTOR WITH INTEGRATED COOLING CHANNEL
REFROIDISSEMENT ACTIF DE MOTEUR AVEC CONDUIT DE REFROIDISSEMENT INTÉGRÉ

(30) Priorität: 02.08.2012 DE 102012107109
(43) Veröffentlichungstag der Anmeldung: 10.06.2015
(73) Patentinhaber: EBM-Papst Mulfingen GmbH&CO. KG, 74673 Mulfingen (DE)
(72) Erfinder: MASCHKE, Matthias, 74635 Kupferzell (DE); REICHERT, Erik, 97944 Boxberg (DE); SCHAFFERT, Friedrich, 74575 Schrozberg (DE); STURM, Michael, 97980 Bad Mergentheim-Rot (DE); FRIES, Astrid, 71672 Marbach (DE)
(74) Vertreter: Staeger & Sperling Partnerschaftsgesellschaft mbB
(86) Internationale Anmeldenummer: PCT/EP2013/065097
(87) Internationale Veröffentlichungsnummer: WO 2014/019853

(56) Entgegenhaltungen:
- WO-A1-97/41630
- WO-A1-2009/063774
- DE-A1- 10 313 273
- JP-A- 2005 192 364
- US-A1- 2011 074 235

## Beschreibung

Die Erfindung betrifft einen Motor, umfassend ein Elektronikgehäuse mit integrierter Motorelektronik, einen Stator und einen Rotor, wobei der Stator eine Statorbuchse und ein Statorblechpaket mit Motorwicklungen umfasst, und wobei die Statorbuchse axial zwischen Elektronikgehäuse und Rotor angeordnet ist.

Derartige Motoren werden insbesondere zum Antrieb von Ventilatoren verwendet. Der maximale Leistungsbereich der Motoren mit integrierter Elektronik, insbesondere Kommutierungselektronik, wird in der Regel durch maximale Bauteil-Temperaturen der Elektronik, zum Beispiel der elektrischen Leistungsbauteile, wie Endstufen, oder des Motors, zum Beispiel der Motorwicklung oder der Kugellager, begrenzt. Die Lebensdauer des Motors ist ebenfalls abhängig von den während des Betriebs des Motors erreichten Bauteil-Temperaturen, wobei erhöhte Temperaturen die Lebensdauer des Motors verkürzen.

Die Motoren werden insbesondere an einer stabilen Befestigungswand oder Tragkonstruktion befestigt. Dazu wird der Stator des Motors üblicherweise mit seiner Statorbuchse in einer Montageöffnung der Befestigungswand oder in einen Rahmen der Tragkonstruktion eingefügt und in einem Randbereich der Statorbuchse mit der Befestigungswand oder der Tragkonstruktion verschraubt. Eine derartige Befestigung erschwert eine effektive Kühlung des Motors beziehungsweise der Elektronik, da ein Umströmen des Motors und des Elektronikgehäuses in axialer Richtung des Motors durch die Befestigungswand oder Tragkonstruktion behindert wird. Zudem werden insbesondere bei Radialventilatoren der Motor und insbesondere das Elektronikgehäuse durch die radiale Abströmung der Luft schlecht oder gar nicht umströmt. Bei Axialventilatoren entsteht im Bereich der Rotorglocke ein sogenanntes Totwassergebiet, welches ebenfalls eine Umströmung des Motors negativ beeinflusst.

Elektromotoren des vorliegenden technischen Gebietes sind beispielsweise aus den Schriften DE 103 13 273 A1, JP 2005 192364 A, US 2011/074235 A1, WO 2009/063774 A1 und WO 97/41630 A1 bekannt.

Der Erfindung liegt die Aufgabe zugrunde, einen Motor zu schaffen, dessen Kühlung verbessert wird und dessen Leistung und Lebensdauer bei gleicher Umgebungstemperatur erhöht wird.

Die Aufgabe wird durch einen Motor nach Anspruch 1 gelöst.

Ein solcher Motor ermöglicht eine aktive und gezielte Kühlung, insbesondere des Elektronikgehäuses und der darin angeordneten Motorelektronik, durch einen vom Luftförderelement erzeugten Luftvolumenstrom. Der Luftvolumenstrom wird anhand der Durchgangsöffnung in der Statorbuchse an die besonders zu kühlenden Bereiche des Motors gezielt geleitet und ermöglicht somit eine besonders effektive Kühlung. Dadurch werden eine erhöhte Leistung und eine längere Lebensdauer des Motors ermöglicht. Je nach Ausführungsform des Motors oder je nach Anwendung und Einbausituation, insbesondere beim Einbau des Motors in eine Montagewand, hat die Umgebungsluft im Bereich des Elektronikgehäuses eine niedrigere Temperatur als im Bereich des Rotors, was durch ein Ansaugen des Luftvolumenstromes an dem Außenumfang des Elektronikgehäuses zusätzlich genutzt wird.

In einer weiteren Ausführungsform der Erfindung ist die Durchgangsöffnung der Statorbuchse radial auf der gleichen Höhe wie ein zu kühlender Bereich der Außenwand des Elektronikgehäuses angeordnet. Insbesondere ist außerdem die Ansaugöffnung radial auf der gleichen Höhe wie die Durchgangsöffnung der Statorbuchse angeordnet.

Dies hat den Vorteil, dass Durchgangsöffnung, Ansaugöffnung und die zu kühlende Außenwand des Elektronikgehäuses radial auf der gleichen Höhe liegen und somit der Luftvolumenstrom besonders einfach und effektiv durch den Motor geleitet werden kann. Dadurch wird auch eine besonders kompakte Bauform des Motors begünstigt.

Weiterhin ist bei einer Ausführungsform der Erfindung zwischen dem Luftförderelement und der Statorbuchse eine ringförmige Deckscheibe auf dem Stator angeordnet. Dabei ist es vorteilhaft wenn das Luftförderelement im Motorbetrieb einen axialen Luftvolumenstrom durch die Ansaugöffnung und durch eine von der Deckscheibe gebildete Durchgangsöffnung und zwischen den Statorkühlrippen entlang einer Außenwand der Statorbuchse am äußeren Rand der Außenwand der Statorbuchse radial ansaugt. Dies ermöglicht eine gezielte zusätzliche Kühlung der Statorbuchse, indem die Deckscheibe zusammen mit der Außenwand der Statorbuchse und den Statorkühlrippen mehrere Kühlkanäle bildet, durch die der Luftvolumenstrom geleitet wird.

In einer weiteren Ausführungsform der Erfindung ist die Statorbuchse in eine Basisstatorbuchse und einen Tragring unterteilt, wobei der Tragring am äußeren Umfang der Basisstatorbuchse befestigt ist und einen umfänglichen Ring um die Basisstatorbuchse bildet, und die Durchgangsöffnung der Statorbuchse in dem Tragring angeordnet ist. Dies ermöglicht, dass der Tragring auf herkömmliche Statoren, die keine Durchgangsöffnung aufweisen, aufgesetzt werden kann, um die für den Kühleffekt benötigte Durchgangsöffnung zur Verfügung zu stellen und einen axialen Luftvolumenstrom vom Rotor zum Elektronikgehäuse zu ermöglichen. Somit ist es möglich, einen erfindungsgemäßen Motor ohne Modifikationen herkömmlicher Statoren basierend auf herkömmlichen Motoren zur Verfügung zu stellen, indem ein Tragring und ein dazu passendes Luftförderelement auf einen herkömmlichen Motor montiert wird.

Vorzugsweise weist das Elektronikgehäuse an seiner Außenwand Gehäusekühlrippen auf, wobei die Gehäusekühlrippen von der Stirnseite des Elektronikgehäuses axial bis zur Durchgangsöffnung der Statorbuchse verlaufen und in der Höhe mit dem radial äußeren Rand der Durchgangsöffnung abschließen und insbesondere der Motor eine Gehäuseabdeckung aufweist, die zumindest einen Teil der Gehäusekühlrippen radial abdeckt. Dies hat den Vorteil, die Strömungsgeschwindigkeit zwischen den Gehäusekühlrippen des Elektronikgehäuses zu erhöhen und den Strömungsweg durch die Gehäusekühlrippen zu verlängern, so dass der Kühleffekt zusätzlich gesteigert wird.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
- Fig. 1: einen Querschnitt im Bereich der Durchgangsöffnung der Statorbuchse eines erfindungsgemäßen Motors gemäß Ausführungsbeispiel 1,
- Fig. 1a: eine vergrößerte Darstellung im Bereich X1 gemäß Fig. 1,
- Fig. 2: einen Querschnitt nicht im Bereich der Durchgangsöffnung der Statorbuchse eines erfindungsgemäßen Motors gemäß Ausführungsbeispiel 1,
- Fig. 2a: eine vergrößerte Darstellung im Bereich Y1 gemäß Fig. 2,
- Fig. 3: eine Seitenansicht mit Teilquerschnitt im Bereich der Durchgangsöffnung eines erfindungsgemäßen Motors gemäß Ausführungsbeispiel 2,
- Fig. 3a: eine vergrößerte Darstellung im Bereich Z1 gemäß Fig. 3.

Die gleichen Bauteile sind in allen Figuren mit denselben Bezugszeichen versehen.

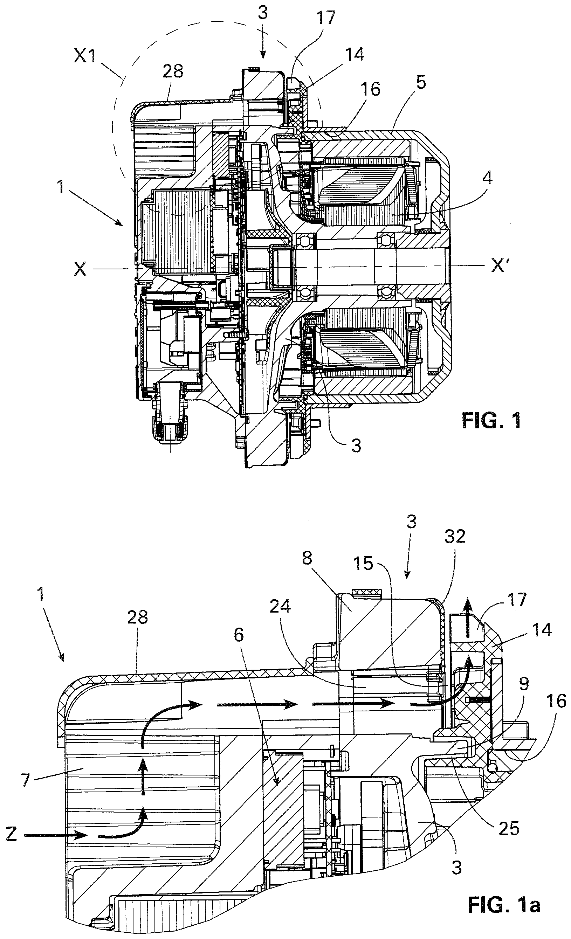

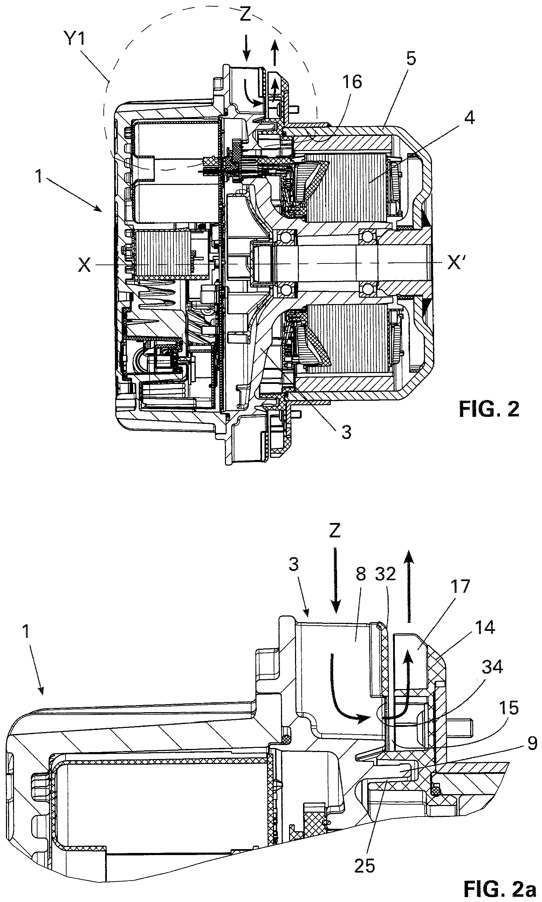

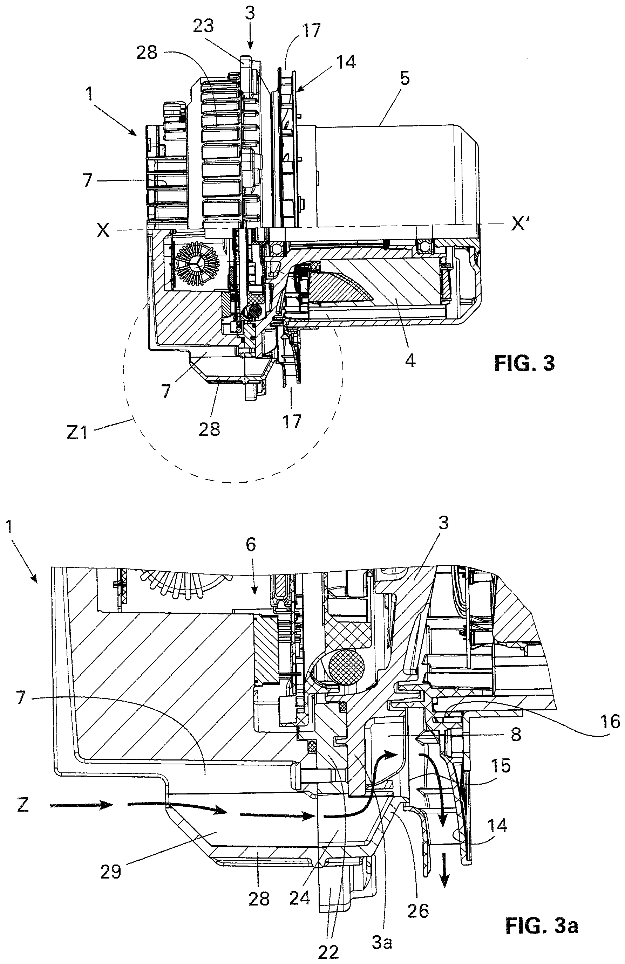

Fig. 1/1a, Fig. 2/2a zeigen eine erste Ausführungsform und Fig. 3/3a zeigt einer weitere Ausführungsform eines erfindungsgemäßen Motors, insbesondere eines erfindungsgemäßen Außenläufermotors. Der Motor umfasst ein Elektronikgehäuse 1, einen Stator, umfassend eine Statorbuchse 3 und ein Statorblechpaket 4 mit Motorwicklungen, und einen Rotor 5, insbesondere Außenläuferrotor. Die Statorbuchse 3 ist axial zwischen Elektronikgehäuse 1 und Rotor 5 angeordnet. Die Statorbuchse 3 und das Elektronikgehäuse 1 sind insbesondere aus Metall. In dem Elektronikgehäuse 1 befindet sich unter anderem eine Motorelektronik zum Antrieb und zur Steuerung des Motors, insbesondere eine Kommutierungselektronik mit elektrischen Leistungsbauteilen 6, wie Endstufen. Das Elektronikgehäuse 1 weist an seiner Außenwand Gehäusekühlrippen 7 zur Kühlung der Motorelektronik innerhalb des Elektronikgehäuses 1 auf. Die Statorbuchse 3 weist an ihrer dem Rotor 5 gegenüberliegenden Außenwand radial verlaufende und sich in Richtung des Rotors 5 axial erstreckende Statorkühlrippen 8 auf, die die Wärme, die insbesondere in einem Statorkugellager und den Motorwicklungen entsteht, ableiten.

Zudem umfasst der erfindungsgemäße Motor ein axial zwischen der Statorbuchse 3 und dem Rotor 5 angeordnetes Luftförderelement 14. Das Luftförderelement 14 ist insbesondere als Radiallüfterrad ausgebildet. Das Luftförderelement 14 ist mit einer mittigen Durchgangsöffnung 16 mit dem Rotor 5 drehfest verbunden. Das Luftförderelement 14 besteht insbesondere aus Kunststoff. Die Durchgangsöffnung 16 des Luftförderelements 14 wird rotorseitig insbesondere vom Rotor 5 abgedeckt. Das Luftförderelement 14 weist auf der Seite der Statorbuchse 3 eine umlaufende Ansaugöffnung 15 als Lufteinlass und radial am Außenumfang eine umlaufende Radialöffnung 17 als Luftauslass auf. Das Luftförderelement 14 weist insbesondere, wie in Fig. 3/3a dargestellt, eine vordere, die Ansaugöffnung 15 umfassende Abdeckscheibe und eine hintere mit Blechronde und Durchgangsöffnung 16 versehene Befestigungsscheibe auf, wobei dazwischen mehrere Schaufeln angeordnet sind. Alternativ kann auch, wie in Fig. 1/1a und Fig. 2/2a dargestellt, ein Luftförderelement 14 ohne vordere Abdeckscheibe verwendet werden. Das Luftförderelement 14 saugt im Motorbetrieb durch die Ansaugöffnung 15 Luft durch das Luftförderelement 14 und bläst diese radial an der Radialöffnung 17 aus.

Zur strömungstechnischen Optimierung und zur Abdichtung zwischen Statorbuchse 3 und Luftförderelement 14 weist die Statorbuchse 3 auf der Seite des Luftförderelementes 14 einen axial verlaufenden Ringkragen 9 auf, der in eine am inneren Umfang der Durchgangsöffnung 16 des Luftförderelementes 14 angeordnete Umfangsringnut 25 hineinreicht.

Die Fig. 1/1a und Fig. 2/2a zeigen eine erste Ausführungsform eines erfindungsgemäßen Motors. Die Statorbuchse 3 weist in einem radial äußeren Randbereich mindestens eine axiale Durchgangsöffnung 24 auf. Die Durchgangsöffnung 24 ist am Umfang der Statorbuchse 3 und radial so angeordnet, dass sie auf der gleichen Höhe wie ein zu kühlender Bereich der Außenwand des Elektronikgehäuses 1 angeordnet ist und diesem Bereich somit gegenüberliegt.

Die Gehäusekühlrippen 7 sind in dem zu kühlenden Bereich vorzugsweise besonders stark, d.h. mit einer besonders großen Außenfläche, ausgebildet, so dass mehrere parallele Gehäusekühlrippen 7 von der Stirnseite des Elektronikgehäuses 1 axial bis zur Durchgangsöffnung 24 der Statorbuchse verlaufen, wobei sie in der Höhe mit dem radial äußeren Rand der Durchgangsöffnung 24 abschließen. Vorzugsweise sind die Gehäusekühlrippen 7 von einer Gehäuseabdeckung 28 zumindest zu einem Teil radial abgedeckt. Die Gehäuseabdeckung 28 ist insbesondere mit dem Elektronikgehäuse oder mit der Statorbuchse 3 einstückig ausgebildet.

Bei der Ausführungsform gemäß Fig. 1/1a ist die Ansaugöffnung 15 des Luftförderelementes 14 insbesondere radial auf der gleichen Höhe wie die Durchgangsöffnung 24 und die Statorkühlrippen 8 der Statorbuchse 3 angeordnet und liegt somit der Durchgangsöffnung 24 und den Statorkühlrippen 8 gegenüber.

Durch das Luftförderelement 14 wird Luft im Bereich der Durchgangsöffnung 24 und im Bereich der Zwischenräume zwischen den Statorkühlrippen 8 der Statorbuchse 3 axial angesaugt und umfangsgemäß radial ausgeblasen. Im Bereich der Durchgangsöffnung 24 entsteht ein etwa parallel zur Motorachse X-X' verlaufender Luftvolumenstrom Z. Dieser Luftvolumenstrom Z wird erfindungsgemäß durch einen integrierten Kühlkanal, der zumindest das Luftförderelement 14 und die Durchgangsöffnung 24 in der Statorbuchse 3 umfasst, innerhalb des erfindungsgemäßen Motors geleitet.

Bei der in Fig. 1/1a dargestellten ersten Ausführungsform wird der integrierte Kühlkanal durch die Gehäusekühlrippen 7, die Gehäuseabdeckung 28 und die Außenwand des Elektronikgehäuses 1, die Durchgangsöffnung 24 der Statorbuchse 3 und das Luftförderelement 14 gebildet. In dieser Ausführungsform wird der Luftvolumenstrom Z zunächst an der Stirnseite des Elektronikgehäuses 1 angesaugt und gezielt über die Oberfläche der Außenwand des Elektronikgehäuses 1 und zwischen den Gehäusekühlrippen 7 geleitet, wonach er durch die Durchgangsöffnung 24 der Statorbuchse 3 strömt und in die Ansaugöffnung 15 des Luftförderelements 14 angesaugt wird und vom Luftförderelement 14 radial ausgeblasen wird. Durch das Überströmen an den aufgewärmten Oberflächen und Kühlrippen erwärmt sich der Luftvolumenstrom Z und kühlt so das Elektronikgehäuse 1 und den Stator.

Fig. 2/2a zeigt einen Querschnitt durch einen Bereich der Statorbuchse 3 zwischen zwei Statorkühlrippen 8, in dem keine Durchgangsöffnung 24 vorhanden ist. Da das Luftförderelement 14 auch in diesem Bereich der Statorbuchse 3 an seiner Ansaugöffnung 15 einen Unterdruck erzeugt, wird der Luftvolumenstrom Z in diesem Bereich radial am äußeren Rand der Statorbuchse 3 angesaugt und strömt radial an der Außenwand und zwischen den Statorkühlrippen 8 der Statorbuchse 3 entlang. Dadurch wird eine zusätzliche Kühlung der Statorbuchse 3 erreicht. Um den zusätzlichen Kühleffekt zu steuern und zu verstärken kann insbesondere zwischen der Statorbuchse 3 und dem Luftförderelement 14 eine ringförmige Deckscheibe 32 auf dem Stator angeordnet sein. Die Deckscheibe 32 ist an der Statorbuchse 3, vorzugsweise an den Statorkühlrippen 8, befestigt. Die Deckscheibe 32 ist derart ausgebildet, dass sie radial von einem äußeren Rand der Durchgangsöffnung 24 bis zu einem äußeren Rand der Statorbuchse 3 verläuft, so dass die Durchgangsöffnung 24 radial unterhalb des inneren Rands der Deckscheibe 32 liegt und von der Deckscheibe 32 nicht verdeckt wird. Zudem sind die Deckscheibe 32, die Statorbuchse 3 und die Statorkühlrippen 8 derart ausgebildet, dass in dem Bereich der Statorbuchse 3, in dem gemäß Fig. 2/2a keine Durchgangsöffnung 24 vorhanden ist, unterhalb der Deckscheibe 32 zwischen dem inneren Rand der Deckscheibe 32, der Außenwand der Statorbuchse 3 und zwischen den Statorkühlrippen 8 mehrere über den Umfang verteilte Durchgangsöffnungen 34 gebildet werden. Alternativ könnte die Deckscheibe 32 auch radial breiter ausgebildet sein und mehrere Durchgangsöffnungen 34, insbesondere zur Verbindung mit der Durchgangsöffnung 24, aufweisen. Die Durchgangsöffnungen 34 ermöglichen eine optimierte Strömung entlang der Außenwand der Statorbuchse 3 und zwischen den Statorkühlrippen 8.

Die Außenwand der Statorbuchse 3, die Statorkühlrippen 8 und die Deckscheibe 32 zusammen mit dem Luftförderelement 14 bilden einen zweiten integrierten Kühlkanal. Der Luftvolumenstrom Z strömt vom äußeren Rand der Außenwand der Statorbuchse 3 entlang der Oberfläche der Außenwand der Statorbuchse 3 und zwischen den Statorkühlrippen 8 durch die von der Deckscheibe 32 gebildete Durchgangsöffnung 34 und von dort in die Ansaugöffnung 15 durch das Luftförderelement 14 zur Radialöffnung 16 des Luftförderelementes 14. Somit wird durch den zweiten integrierten Kühlkanal im Motorbetrieb der Luftvolumenstrom Z durch das Luftförderelement 14 am äußeren Rand der Außenwand der Statorbuchse 3 radial angesaugt und dann axial vom Luftförderelement 14 angesaugt und dann radial an der Radialöffnung 17 ausgeblasen. Durch das Überströmen an den aufgewärmten Oberflächen und Kühlrippen erwärmt sich der Luftvolumenstrom Z und kühlt so insbesondere den Stator und die Statorbuchse 3.

In Fig. 3/3a wird eine zweite Ausführungsform eines erfindungsgemäßen Motors dargestellt. Die Statorbuchse 3 ist in eine Basisstatorbuchse 3a und einen Tragring 22 unterteilt. Der Tragring 22 ist insbesondere zwischen dem Elektronikgehäuse 1 und der Basisstatorbuchse 3a angeordnet und mit der Basisstatorbuchse 3a und insbesondere auch mit dem Elektronikgehäuse 1 möglichst gut thermisch leitend verbunden. Der Tragring 22 ist am äußeren Umfang der Basisstatorbuchse 3a befestigt und bildet einen umfänglichen Ring um die Basisstatorbuchse 3a. Der Tragring 22 weist an seinem äußeren Umfang radial verlaufende, über den Umfang verteilte Befestigungsansätze 23 zur Befestigung des Motors an einer nicht dargestellten Befestigungswand auf. Der Tragring 22 umfasst mindestens eine axial verlaufende, in seiner Ringwand angeordnete Durchgangsöffnung 24. Alternativ können auch mehrere Durchgangsöffnungen 24 über den Umfang in dem Tragring 22 verteilt sein.

Die Statorkühlrippen 8 des Stators verlaufen vorzugsweise radial vom äußeren Rand der Außenwand der Basisstatorbuchse 3a nach innen und erstrecken sich axial von der rotorseitigen Außenwand der Basisstatorbuchse 3a in Richtung des Luftförderelementes 14. Die Ansaugöffnung 15 des Luftförderelementes 14 und die Statorkühlrippen 8 der Basisstatorbuchse 3a sind derart radial angeordnet, dass sie auf der gleichen Höhe und sich gegenüber liegen.

Die Durchgangsöffnung 24 ist insbesondere derart angeordnet, dass sie radial oberhalb eines äußeren Randes der Basisstatorbuchse 3a und auf der gleichen Höhe wie die Außenwand des Elektronikgehäuses 1 liegt, und zwar so, dass sie einem zu kühlenden Bereich an der Umfangswand des Elektronikgehäuses 1 gegenüberliegt.

Die Gehäusekühlrippen 7 sind in dem zu kühlenden Bereich des Elektronikgehäuses 1 vorzugsweise besonders stark ausgebildet, so dass mehrere parallele Gehäusekühlrippen 7 von der Stirnseite des Elektronikgehäuses 1 axial bis zur Durchgangsöffnung 24 des Tragrings 22 verlaufen, wobei sie in der Höhe mit dem radial äußeren Rand der Durchgangsöffnung 24 abschließen. Vorzugsweise sind die Gehäusekühlrippen 7 von einer Gehäuseabdeckung 28 zumindest teilweise radial abgedeckt. Wie in Fig. 3/3a dargestellt, ist die Gehäuseabdeckung 28 insbesondere schalenförmig ausgebildet und umhüllt den ganzen Umfang des Elektronikgehäuses 1, so dass bei mehreren Durchgangsöffnungen 24 in dem Tragring 22 auch mehrere zu kühlende Bereiche des Elektronikgehäuses 1 abgedeckt werden, beziehungsweise das Elektronikgehäuse 1 vollumfänglich gekühlt wird. Zwischen den umfänglich angeordneten Gehäusekühlrippen 7 und der Gehäuseabdeckung 28 werden dadurch separate parallele Kühlkanäle 29 ausgebildet. Die Gehäuseabdeckung 28 ist in ihrer Form der Form der Umfangswand des Elektronikgehäuses 1 und der Gehäusekühlrippen 7 angepasst und kann sowohl als separates Teil, insbesondere aus Kunststoff, an dem Elektronikgehäuse 1 oder dem Tragring 22 befestigt oder einstückig mit dem Elektronikgehäuse 1 oder mit dem Tragring 22 ausgebildet sein.

Auf der Seite der Basisstatorbuchse 3a weist der Tragring 22 eine trichterförmig in Richtung des Luftförderelementes 14 konisch zulaufende, die Statorkühlrippen 8 abdeckende Ringwand 26 auf. Die Ringwand 26 verläuft bis zum radial äußeren Rand der Ansaugöffnung 15 des Luftförderelementes 14, so dass der Tragring 22 die Basisstatorbuchse 3a und die Statorkühlrippen 8 umfangsgemäß umhüllt und zwischen der Außenwand und den Statorkühlrippen 8 der Basisstatorbuchse 3a, der Ansaugöffnung 15 des Luftförderelements 14 und der Ringwand 26 des Tragrings 22 ein Strömungsraum gebildet wird. Der Tragring 22 ist insbesondere aus Metall, und die Durchgangsöffnung 24 und die Ringwand 26 vorzugsweise strömungstechnisch optimiert ausgebildet.

Das Luftförderelement 14 ist vorzugsweise mit dem Rotor 5 drehfest montiert und erzeugt im Motorbetrieb an der Ansaugöffnung 15 einen Unterdruck. Dadurch wird Luft im Bereich der Statorkühlrippen 8 der Basisstatorbuchse 3a aus dem Strömungsraum axial angesaugt. Im Bereich der Durchgangsöffnung 24 entsteht ein etwa parallel zur Motorachse X-X' verlaufender Luftvolumenstrom Z. Dieser Luftvolumenstrom Z wird erfindungsgemäß durch einen integrierten Kühlkanal, der zumindest das Luftförderelement 14 und die Durchgangsöffnung 24 des Tragrings 22 umfasst, geleitet.

In der in Fig. 3/3a dargestellten Ausführungsform wird der im Motor integrierte Kühlkanal durch die Gehäusekühlrippen 7, die Gehäuseabdeckung 28 und die Außenwand des Elektronikgehäuses 1, die Durchgangsöffnung 24 des Tragrings 22, die rotorseitige Außenwand der Basisstatorbuchse 3a, die Statorkühlrippen 8 und das Luftförderelement 14 gebildet. Der Luftvolumenstrom Z strömt zunächst von der Stirnseite des Elektronikgehäuses 1 entlang der Oberfläche des Elektronikgehäuses 1 und zwischen den Gehäusekühlrippen 7, anschließend durch die Durchgangsöffnung 24 und entlang der Oberfläche des Tragrings 22 und der Oberfläche der Basisstatorbuchse 3a und zwischen den Statorkühlrippen 8 durch die Strömungskammer, und danach durch die Ansaugöffnung 15 des Luftförderelementes 14 und durch das Luftförderelement 14 und die Radialöffnung 17, wo der Luftvolumenstrom Z ausgeblasen wird. Durch das Überströmen an den aufgewärmten Oberflächen und Kühlrippen erwärmt sich der Luftvolumenstrom Z und kühlt so die Motorelektronik und den Stator. Der erwärmte Luftvolumenstrom Z wird an der Radialöffnung 17 des Luftförderelementes 14 in die Umgebung ausgeblasen.

Die zweite Ausführungsform hat insbesondere den Vorteil, dass der Tragring 22 auf herkömmliche Statoren, die keine Durchgangsöffnung 24 aufweisen, aufgesetzt werden kann, um den erfindungsgemäßen integrierten Kühlkanal zu bilden. Somit ist es möglich den integrierten Kühlkanal ohne Modifikationen herkömmlicher Statoren zur Verfügung zu stellen.

Bei beiden Ausführungsformen ergibt sich durch den vom Luftförderelement 14 aktiv geförderten und von der Statorbuchse 3 beziehungsweise vom Tragring 22 gezielt geleiteten Luftvolumenstrom Z eine erhöhte Strömungsgeschwindigkeit im Bereich der Gehäusekühlrippen 7 des Elektronikgehäuses 1 und der Statorkühlrippen 8 der Statorbuchse 3. Im Vergleich zur natürlichen Konvektion wird hierdurch an den zu kühlenden Oberflächen ein deutlich höherer Wärmeübergang erzielt. Dies führt zu reduzierten Bauteiltemperaturen innerhalb der Motorelektronik sowie zu niedrigeren Temperaturen im Stator. Zudem wird der benötigte Bauraum des Motors möglichst klein gehalten. Bei mehreren Durchgangsöffnungen 24 in der Statorbuchse 3 beziehungsweise in dem Tragring 22 wirkt sich die gleichmäßig über den Umfang des Luftförderelementes 14 verteilte Zuströmung vorteilhaft auf den aerodynamischen Wirkungsgrad des Luftförderelementes 14 aus.

Die einteilige Gestaltung der Statorbuchse 3 im ersten Ausführungsbeispiel hat im Vergleich zur zweiteiligen Ausgestaltung mit Tragring 22 im zweiten Ausführungsbeispiel den Vorteil, dass der Montageaufwand bei der Herstellung eines erfindungsgemäßen Motors verringert wird.

Die Erfindung ist nicht auf die dargestellten und beschriebenen Ausführungsbeispiele beschränkt, sondern umfasst auch alle im Sinne der Erfindung gleichwirkenden Ausführungen, wie in den beiliegenden Ansprüche beansprucht.

## Patentansprüche

1. Außenläufermotor, umfassend ein Elektronikgehäuse (1) mit integrierter Motorelektronik, einen Stator und einen Rotor (5), wobei der Stator eine Statorbuchse (3) und ein Statorblechpaket (4) mit Motorwicklungen umfasst, und
wobei die Statorbuchse (3) axial zwischen dem Elektronikgehäuse (1) und dem Rotor (5) und das Statorblechpaket (4) mit Motorwicklungen an dem Rotor (5) angeordnet ist, und,
ferner umfassend ein mit dem Rotor (5) drehfest verbundenes Luftförderelement (14) und mindestens eine in der Statorbuchse (3) angeordnete axial verlaufende Durchgangsöffnung (24), wobei das Luftförderelement (14) axial zwischen Statorbuchse (3) und Rotor (5) angeordnet ist und auf der Seite der Statorbuchse (3) eine umlaufende axiale Ansaugöffnung (15) aufweist, wobei das Luftförderelement (14) im Motorbetrieb einen axialen Luftvolumenstrom (Z) durch die Ansaugöffnung (15) und die Durchgangsöffnung an einer Außenwand des Elektronikgehäuses (1) ansaugt, wobei die Statorbuchse (3) in einem radial äußeren Randbereich die mindestens eine axiale Durchgangsöffnung (24) aufweist, die am Umfang der Statorbuchse (3) radial so angeordnet ist,
dass sie auf der gleichen Höhe wie ein zu kühlender Bereich der Außenwand des Elektronikgehäuses (1) angeordnet ist und diesem Bereich gegenüberliegt, und wobei das Luftförderelement (14) als Radiallüfterrad ausgebildet ist, das Luft an der Ansaugöffnung (15) axial ansaugt und radial an einer in Umfangsrichtung umlaufenden Radialöffnung (17) ausbläst.

2. Motor nach Anspruch 1,
**dadurch gekennzeichnet, dass**
das Luftförderelement (14) eine Durchgangsöffnung (16) aufweist und mit der Durchgangsöffnung (16) auf dem Rotor (5) drehfest verbunden ist.

3. Motor nach Anspruch 2,
**dadurch gekennzeichnet, dass**
der Rotor (5) die Durchgangsöffnung (16) des Luftförderelements (14) rotorseitig axial abdeckt.

4. Motor nach einem der Ansprüche 1 bis 3,
**dadurch gekennzeichnet, dass**
die Ansaugöffnung (15) radial auf der gleichen Höhe wie die Durchgangsöffnung (24) der Statorbuchse (3) angeordnet ist.

5. Motor nach einem der Ansprüche 1 bis 4,
**dadurch gekennzeichnet, dass**
die Statorbuchse (3) an der Seite des Rotors (5) radial verlaufende und sich axial erstreckende Statorkühlrippen (8) aufweist.

6. Motor nach einem der Ansprüche 1 bis 5,
**dadurch gekennzeichnet, dass**
zwischen dem Luftförderelement (14) und der Statorbuchse (3) eine ringförmige Deckscheibe (32) auf dem Stator angeordnet ist.

7. Motor nach Anspruch 6
**dadurch gekennzeichnet, dass**
das Luftförderelement (14) im Motorbetrieb einen axialen Luftvolumenstrom (Z) durch die Ansaugöffnung (15) und durch eine von der Deckscheibe (32) gebildete Durchgangsöffnung (34) und zwischen den Statorkühlrippen (8) entlang einer Außenwand der Statorbuchse (3) am äußeren Rand der Außenwand der Statorbuchse (3) radial ansaugt.

8. Motor nach Anspruch 6 oder 7,
**dadurch gekennzeichnet, dass**
die Deckscheibe (32) derart ausgebildet ist, dass sie radial von einemäußeren Rand der Durchgangsöffnung (24) der Statorbuchse (3) bis zu einem äußeren Rand der Außenwand der Statorbuchse (3) verläuft.

9. Motor nach einem der Ansprüche 6 bis 8,
**dadurch gekennzeichnet, dass**
die Deckscheibe (32) an den Statorkühlrippen (8) befestigt ist.

10. Motor nach einem der Ansprüche 1 bis 9,
**dadurch gekennzeichnet, dass**
die Statorbuchse (3) in eine Basisstatorbuchse (3a) und einen Tragring (22) unterteilt ist, wobei der Tragring (22) am äußeren Umfang der Basisstatorbuchse (3a) befestigt ist und einen umfänglichen Ring um die Basisstatorbuchse (3a) bildet, und die Durchgangsöffnung (24) der Statorbuchse (3) in dem Tragring (22) angeordnet ist.

11. Motor nach einem der Ansprüche 1 bis 10,
**dadurch gekennzeichnet, dass**
das Elektronikgehäuse (1) an seiner Außenwand Gehäusekühlrippen (7) aufweist, wobei die Gehäusekühlrippen (7) von der Stirnseite des Elektronikgehäuses (1) axial bis zur Durchgangsöffnung (24) der Statorbuchse (3) verlaufen und in der Höhe mit dem radial äußeren Rand der Durchgangsöffnung (24) abschließen,

12. Motor nach Anspruch 11,
**dadurch gekennzeichnet, dass**
eine Gehäuseabdeckung (28) zumindest einen Teil der Gehäusekühlrippen (7) radial abdeckt.

13. Motor nach Anspruch 12,
**dadurch gekennzeichnet, dass**
die Gehäuseabdeckung (28) und das Elektronikgehäuse (1)oder die Gehäuseabdeckung (28) und die Statorbuchse (3) einstückig ausgebildet sind.

## Claims

1. An external rotor motor, comprising an electronics housing (1) with integrated motor electronics, a stator and a rotor (5), wherein the stator comprises a stator bushing (3) and a laminated stator core (4) with motor windings, and
wherein the stator bushing (3) is arranged axially between the electronics housing (1) and the rotor (5), and the laminated stator core (4) with motor windings is arranged on the rotor (5), and
further comprising an air conveyor element (14) which is non-rotatably connected to the rotor (5) and at least one axially extending passage opening (24) arranged in the stator bushing (3), wherein the air conveyor element (14) is arranged axially between stator bushing (3) and rotor (5) and has a circumferential axial suctioning opening (15) on the side of the stator bushing (3), wherein the air conveyor element (14) during motor operation suctions an axial air volume stream (Z) through the suctioning opening (15) and the passage opening on an outer wall of the electronics housing (1), wherein the stator bushing (3) has an axial passage opening (24) in a radially outer marginal region, which is radially arranged on the circumference of the stator bushing (3) such that it is arranged at the same level as a region of the outer wall of the electronics housing (1), which is to be cooled, and faces this region, and wherein the air conveyor element (14) is designed as a radial fan wheel which axially suctions the air at the suctioning opening (15) and radially expels the air at a radial opening (17) which is circumferential in the circumferential direction.

2. The motor according to Claim 1,
**characterised in that**
the air conveyor element (14) has a passage opening (16) and is non-rotatably connected to the passage opening (16) on the rotor (5).

3. The motor according to Claim 2,
**characterised in that**
the rotor (5) axially covers the passage opening (16) of the air conveyor element (14) on the rotor side.

4. The motor according to any one of Claims 1 to 3,
**characterised in that**
the suctioning opening (15) is arranged radially at the same level as the passage opening (24) of the stator bushing (3).

5. The motor according to any one of Claims 1 to 4,
**characterised in that**
the stator bushing (3) has radially extending and axially extending stator cooling ribs (8) on the side of the rotor (5).

6. The motor according to any one of Claims 1 to 5,
**characterised in that**,
between the air conveyor element (14) and the stator bushing (3), an annular cover plate (32) is arranged on the stator.

7. The motor according to Claim 6,
**characterised in that**,
during motor operation, the air conveyor element (14) radially suctions an axial air volume stream (Z) through the suctioning opening (15) and through a passage opening (34) formed by the cover plate (32) and between the stator cooling ribs (8) along an outer wall of the stator bushing (3) on the outer margin of the outer wall of the stator bushing (3).

8. The motor according to Claim 6 or 7,
**characterised in that**
the cover plate (32) is designed in such a manner that it extends radially from an outer margin of the passage opening (24) of the stator bushing (3) up to an outer margin of the outer wall of the stator bushing (3).

9. The motor according to any one of Claims 6 to 8,
**characterised in that**
the cover plate (32) is fastened to the stator cooling ribs (8).

10. The motor according to any one of Claims 1 to 9,
**characterised in that**
the stator bushing (3) is subdivided into a base stator bushing (3a) and a support ring (22), wherein the support ring (22) is fastened on the outer circumference of the base stator bushing (3a) and forms a circumferential ring around the base stator bushing (3a), and the passage opening (24) of the stator bushing (3) is arranged in the support ring (22).

11. The motor according to any one of Claims 1 to 10,
**characterised in that**
the electronics housing (1) has housing cooling ribs (7) on its outer wall, wherein the housing cooling ribs (7) extend axially from the end face of the electronics housing (1) to the passage opening (24) of the stator bushing (3) and terminate at the level of the radially outer margin of the passage opening (24).

12. The motor according to Claim 11,
**characterised in that**
a housing cover (28) radially covers at least a portion of the housing cooling ribs (7).

13. The motor according to Claim 12,
**characterised in that**
the housing cover (28) and the electronics housing (1) or the housing cover (28) and the stator bushing (3) are designed to form a single piece.

## Revendications

1. Moteur à induit extérieur, comprenant un boîtier électronique (1) pourvu d'une électronique de moteur intégrée, un stator et un rotor (5), dans lequel le stator comprend une douille de stator (3) et un empilage de tôles de stator (4) pourvu d'enroulements de moteur, et
dans lequel la douille de stator (3) est agencée axialement entre le boîtier électronique (1) et le rotor (5) et l'empilage de tôles de stator (4) pourvu d'enroulements de moteur est agencé au niveau du rotor (5), et
comprenant en outre un élément de transport d'air (14) relié de manière solidaire en rotation avec le rotor (5) et au moins une ouverture de passage (24) s'étendant axialement et agencée dans la douille de stator (3), dans lequel l'élément de transport d'air (14) est agencé axialement entre la douille de stator (3) et le rotor (5) et comporte sur la face de la douille de stator (3) une ouverture d'aspiration (15) axiale et périphérique, dans lequel l'élément de transport d'air (14), lorsque le moteur est en fonctionnement, aspire un débit volumique d'air axial (Z) par l'ouverture d'aspiration (15) et l'ouverture de passage au niveau d'une paroi extérieure du boîtier électronique (1), dans lequel la douille de stator (3) comporte dans une zone de bord radialement extérieure la au moins une ouverture de passage (24) axiale qui est agencée radialement sur le pourtour de la douille de stator (3) de sorte qu'elle est agencée à la même hauteur qu'une zone à refroidir de la paroi extérieure du boîtier électronique (1) et fait face à cette zone, et dans lequel l'élément de transport d'air (14) est réalisé en tant que roue de ventilateur radial, qui aspire axialement l'air au niveau de l'ouverture d'aspiration (15) et l'évacue radialement au niveau d'une ouverture radiale (17) s'étendant dans la direction circonférentielle.

2. Moteur selon la revendication 1,
**caractérisé en ce que**
l'élément de transport d'air (14) comporte une ouverture de passage (16) et est relié de manière solidaire en rotation avec l'ouverture de passage (16) sur le rotor (5).

3. Moteur selon la revendication 2,
**caractérisé en ce que**
le rotor (5) couvre axialement l'ouverture de passage (16) de l'élément de transport d'air (14) côté rotor.

4. Moteur selon l'une quelconque des revendications 1 à 3,
**caractérisé en ce que**
l'ouverture d'aspiration (15) est agencée radialement à la même hauteur que l'ouverture de passage (24) de la douille de stator (3).

5. Moteur selon l'une quelconque des revendications 1 à 4,
**caractérisé en ce que**
la douille de stator (3) comporte sur la face du rotor (5) des ailettes de refroidissement de stator (8) s'étendant radialement et se prolongeant axialement.

6. Moteur selon l'une quelconque des revendications 1 à 5,
**caractérisé en ce que**
entre l'élément de transport d'air (14) et la douille de stator (3), un disque de recouvrement (32) de forme annulaire est agencé sur le stator.

7. Moteur selon la revendication 6,
**caractérisé en ce que**
l'élément de transport d'air (14), lorsque le moteur est en fonctionnement, aspire radialement un débit volumique d'air axial (Z) par l'ouverture d'aspiration (15) et par une ouverture de passage (34) formée par le disque de recouvrement (32) et entre les ailettes de refroidissement de stator (8) le long d'une paroi extérieure de la douille de stator (3) au niveau d'un bord extérieur de la paroi extérieure de la douille de stator (3).

8. Moteur selon la revendication 6 ou 7,
**caractérisé en ce que**
le disque de recouvrement (32) est réalisé de telle sorte qu'il s'étend radialement d'un bord extérieur de l'ouverture de passage (24) de la douille de stator (3) jusqu'à un bord extérieur de la paroi extérieure de la douille de stator (3).

9. Moteur selon l'une quelconque des revendications 6 à 8,
**caractérisé en ce que**
le disque de recouvrement (32) est fixé aux ailettes de refroidissement de stator (8).

10. Moteur selon l'une quelconque des revendications 1 à 9,
**caractérisé en ce que**
la douille de stator (3) est divisée en une douille de stator de base (3a) et un anneau porteur (22), dans lequel l'anneau porteur (22) est fixé sur un pourtour extérieur de la douille de stator de base (3a) et forme un anneau périphérique autour de la douille de stator de base (3a), et l'ouverture de passage (24) de la douille de stator (3) est agencée dans l'anneau porteur (22).

11. Moteur selon l'une quelconque des revendications 1 à 10,
**caractérisé en ce que**
le boîtier électronique (1) comporte sur sa paroi extérieure des ailettes de refroidissement de boîtier (7), dans lequel les ailettes de refroidissement de boîtier (7) s'étendent de la face frontale du boîtier électronique (1) axialement jusqu'à l'ouverture de passage (24) de la douille de stator (3) et se terminent en hauteur avec le bord radialement extérieur de l'ouverture de passage (24).

12. Moteur selon la revendication 11,
**caractérisé en ce que**
un couvercle de boîtier (28) couvre radialement au moins une partie des ailettes de refroidissement de boîtier (7).

13. Moteur selon la revendication 12,
**caractérisé en ce que**
le couvercle de boîtier (28) et le boîtier électronique (1) ou le couvercle de boîtier (28) et la douille de stator (3) sont réalisés d'un seul tenant.
